# EUROPÄISCHE PATENTSCHRIFT

(11) **EP 2 996 096 B1**
(45) Veröffentlichungstag und Bekanntmachung des Hinweises auf die Patenterteilung: **05.07.2017**
(21) Anmeldenummer: 15177449.4
(22) Anmeldetag: 20.07.2015
(51) Int. Cl.: G08B 5/36, G08B 7/06

(54) **BELEUCHTUNGSGESTEUERTE PERSONENFÜHRUNG**
ILLUMINATION CONTROLLED GUIDANCE OF PEOPLE
PROCEDE DE GUIDAGE DE PERSONNES PAR ECLAIRAGE

(30) Priorität: 09.09.2014 DE 102014217983
(43) Veröffentlichungstag der Anmeldung: 16.03.2016
(73) Patentinhaber: SBF Spezialleuchten GmbH, 04316 Leipzig (DE)
(72) Erfinder: Heilmann, Andreas, 04451 Borsdorf (DE); Czekay, Dietmar, 04177 Leipzig (DE)
(74) Vertreter: Reichert & Lindner Partnerschaft Patentanwälte

(56) Entgegenhaltungen:
- WO-A1-2011/029673
- WO-A1-2012/084184
- US-A- 6 150 943

## Beschreibung

Die vorliegende Erfindung betrifft ein System zur beleuchtungsgesteuerten Personenführung in einem begrenzten Raumbereich, insbesondere in einem Personentransportmittel wie etwa einem Schienenfahrzeug bzw. Zug, einem Flugzeug oder einem Schiff. Insbesondere betrifft die Erfindung eine Beleuchtungseinrichtung und ein Verfahren zur Bereitstellung von Orientierungsinformationen bezüglich des Raumbereichs, ein Personentransportmittel mit einer solchen Beleuchtungseinrichtung, ein elektronisches Endgerät zum Zusammenwirken mit der Beleuchtungseinrichtung und zur Ausgabe von auf den Orientierungsinformationen beruhenden Ausgabedaten sowie ein Computerprogramm zu Ausführung auf dem mobilen elektronischen Endgerät.

Wenn eine Anzahl von Personen in einem begrenzten Raumbereich untergebracht werden soll, wie dies beispielsweise beim der Aufnahme von Passagieren in einem Personentransportmittel, wie etwa einem Zug, Flugzeug oder Schiff der Fall ist, so ist dabei regelmäßig eine schnelle, effiziente und fehlerfreie Aufnahme gewünscht. Eine andere, vergleichbare Situation ist gegeben, wenn es um die Aufnahme von Gästen bzw. Publikum in einem Veranstaltungsraum geht, etwa im Theater, Kino, Konzertsaal, einer Speisestätte oder einer Sportstätte oder Ähnlichem. Daneben ist noch eine Vielzahl anderer vergleichbarer Situationen vorstellbar, bei der es um eine optimierte Aufnahme von Personen in einem begrenzten Raumbereich geht. Insbesondere können für den Zugang zu dem Raumbereich auch Tickets vorgesehen sein, insbesondere solche die einem bestimmten Platz, etwa einem Sitz oder Stehplatz oder einem bestimmten Raum oder Teilbereich innerhalb des begrenzten Raumbereichs zugeordnet sind.

Traditionell wird die Aufnahme von Personen in einen solchen begrenzten Raumbereich meist über Hinweisschilder, Platznummern oder Ähnliches, Platzkarten oder Hinweisen auf Tickets organisiert. Inzwischen ist es auch üblich geworden, derartige Tickets elektronisch zur Verfügung zu stellen, insbesondere auf so genannten "Smart Devices", also insbesondere auf Smartphones und Tablet-Computern oder anderen vergleichbaren tragbaren mobilen Endgeräten. So sind etwa elektronische Fahrkarten für Züge und Schiffe (z.B. Fähren), elektronische Tickets und Bordkarten für Flugzeuge, sowie elektronische Veranstaltungstickets inzwischen vielfach im Einsatz.

WO 2012/084184 A1, WO 2011/029673 A1 und US 6,150,943 A offenbaren jeweils eine Beleuchtungseinrichtung zur Bereitstellung von Orientierungsinformationen bezüglich eines begrenzten Raumbereichs. Die Beleuchtungseinrichtung weist wenigstens eine Lichtquelle und eine Modulationsvorrichtung zum Modulieren des von der Lichtquelle ausgesendeten Lichts auf. Die Modulationsvorrichtung ist konfiguriert, durch Modulation des von der Lichtquelle ausgesendeten Lichts diesem Daten aufzuprägen, welche eine eindeutige Kennung der Beleuchtungseinrichtung enthalten oder eine räumliche Position der Beleuchtungseinrichtung innerhalb des begrenzten Raumbereichs kennzeichnen.

Vor diesem Hintergrund ist es Aufgabe der vorliegenden Erfindung, eine verbesserte Personenführung bereitzustellen, die eine schnelle, effiziente und möglichst fehlerfreie Aufnahme von Personen in einen begrenzten Raumbereich unterstützt.

Diese Aufgabe wird gelöst durch ein System und ein Verfahren zur Bereitstellung von Orientierungsinformationen gemäß Anspruch 1 bzw. Anspruch 9, durch eine Verwendung des Systems für ein Personentransportmittel gemäß Anspruch 11 sowie durch ein Computerprogramm gemäß Anspruch 14 zur Ausführung auf einem mobilen elektronischen Endgerät.

Bevorzugte Ausgestaltungen und Weiterbildungen der Erfindung sind Gegenstand der abhängigen Ansprüche.

Gemäß einem ersten Aspekt betrifft die Erfindung eine Beleuchtungseinrichtung zur Bereitstellung von Orientierungsinformationen bezüglich eines begrenzten Raumbereichs, insbesondere eines Raumbereichs in einem Personentransportmittel. Die Beleuchtungseinrichtung weist wenigstens eine Lichtquelle und eine Modulationsvorrichtung zum Modulieren des von der Lichtquelle ausgesendeten Lichts auf. Dabei ist die Modulationsvorrichtung konfiguriert, durch Modulation des von der Lichtquelle ausgesendeten Lichts diesem Daten aufzuprägen, welche eine eindeutige Kennung der Beleuchtungseinrichtung enthalten oder eine räumliche Position der Beleuchtungseinrichtung innerhalb des begrenzten Raumbereichs kennzeichnen.

Unter "Beleuchtungseinrichtung" im Sinne der Erfindung ist eine Vorrichtung zu verstehen, die mittels einer oder mehreren Lichtquellen, wie etwa Glühbirnen, Gasentladungsröhren oder LEDs, Licht erzeugt und ausstrahlt, und die geeignet ist, wenigstens einen Teilbereich eines räumlich begrenzten Raumbereichs zu beleuchten. Insbesondere kann eine Beleuchtungseinrichtung eine Lampe sein. Dabei ist hier unter "Licht" elektromagnetische Strahlung zu verstehen, bevorzugt mit einer Wellenlänge oberhalb des ultravioletten Bereichs, also oberhalb von 400nm, insbesondere im optischen, d.h. sichtbaren Bereich des Spektrums.

Unter einem "begrenzten Raumbereich" im Sinne der Erfindung ist ein zur Aufnahme von Personen geeigneter, in seinen Ausmaßen begrenzter Ausschnitt aus dem dreidimensionalen Raum zu verstehen. Insbesondere kann ein solcher Raumbereich durch für die Personenaufnahme bestimmte Bereiche innerhalb eines Personentransportmittels oder eines Veranstaltungsraums definiert sein. Auch ein großer Parkplatz (oder Parkhaus), bei dem eine Personenführung zurück zum geparkten Fahrzeug erfolgen soll, ist als ein solcher Raumbereich vorstellbar. Weitere Beispiele wurden bereits vorausgehend genannt. Typischerweise liegen die Ausmaße des begrenzten Raumbereichs dabei im Größenbereich von wenigen Metern (z.B. bei Bus, Kino oder Flugzeug) bis hin zu wenigen hundert Metern (z.B. bei einem Zug oder einem Großparkplatz).

Unter einem "Personentransportmittel" im Sinne der Erfindung ist dabei jede Art von Transportvorrichtung zu verstehen, die zur Beförderung von Personen, insbesondere einer Vielzahl von Personen bestimmt oder jedenfalls geeignet ist. Dazu gehören insbesondere Massentransportmittel wie Züge, Flugzeuge und Schiffe sowie Busse und ähnliche Kraftfahrzeuge.

Unter einer "Modulationsvorrichtung" im Sinne der Erfindung ist eine Vorrichtung zu verstehen, mittels derer das von einer Lichtquelle auszusendende Licht zum Zwecke der Aufprägung von mittels des Lichts zu übertragender Daten moduliert werden kann. Die Modulation kann dabei insbesondere über datenabhängige Änderungen der Amplitude ("Helligkeit" bzw. "Lichtstärke") oder der Frequenz ("Farbe") des Lichts, insbesondere durch datengesteuertes Ein- und Ausschalten der Lichtquelle erfolgen. Daneben sind auch andere Modulationsarten bekannt. Der Begriff "Modulation" soll in diesem Zusammenhang insbesondere, aber nicht ausschließlich eine bitweise Modulation umfassen. Diese Modulation findet vorzugsweise hochfrequent, d.h. zumindest im MHz-Bereich statt, sodass Datenübertragungsraten von einigen 100 MBit/s und mehr erreicht werden können. Die Lichtquelle ist dementsprechend vorzugsweise so ausgestaltet, dass sie entsprechend hohe Schaltfrequenzen, d.h. durch hochfrequente Modulation erzeugte Änderungen des ausgesandten Lichts wie etwa Helligkeitsschwankungen, umsetzen kann. Dies trifft in der Regel insbesondere für LEDs zu.

Unter einer "Kennung" einer Beleuchtungseinrichtung im Sinne der Erfindung ist ein Zeichen zur eindeutigen Identifizierung der Beleuchtungseinrichtung zu verstehen. Dabei kann das Zeichen insbesondere in Form von die Kennung repräsentierenden digitalen Daten dem von der Beleuchtungseinrichtung auszusendendem Licht aufgeprägt sein. Allerdings ist auch eine analoge Kennungsübertragung, etwa durch ein charakteristisches Lichtsignal möglich.

Unter einer "räumlichen Position" im Sinne der Erfindung ist eine bestimmte Position innerhalb des begrenzten Raumbereichs zu verstehen. Die Position kann dabei insbesondere absolut bezüglich eines von dem begrenzten Raumbereich unabhängigen Koordinatensystems oder relativ zu einem definierten Bezugspunkt des begrenzten Raumbereichs bestimmt sein.

Die erfindungsgemäße Beleuchtungseinrichtung liefert, in Analogie zu einem Leuchtfeuer, durch Übertragung Ihrer Kennung bzw. ihrer räumlichen Position bezüglich des begrenzten Raumbereichs über die Lichtmodulation Informationen, die leicht mit einem lichtempfindlichen Empfänger, insbesondere einer Kamera, eines mobilen elektronischen Endgeräts (zum Beispiel eines Smartphones) empfangen werden können. Auf dem Endgerät können diese Informationen dann ausgewertet werden, insbesondere auch unter Verwendung von zusätzlichen Referenzdaten (zum Beispiel elektronisches Ticket oder Daten, welche die Kennung einer räumlichen Position zuordnen), um Ausgabedaten zu erzeugen, die Informationen zur Position der Beleuchtungseinrichtung und damit zur ungefähren Position des Endgeräts und somit seines Benutzers relativ zum begrenzten Raumbereich liefern Die Ausgabedaten können auch Informationen zur Navigation innerhalb des Raumbereichs, etwa Navigationshinweise zu einem reservierten Sitzplatz, liefern. Diese Informationen zur Personenführung können dann an einer Ausgabevorrichtung, insbesondere einem Bildschirm oder einer akustischen Ausgabevorrichtung des Endgeräts ausgegeben werden, um den Benutzer über seinen Standort zu informieren bzw. zu einer Zielposition im Raumbereich führen. Da heutzutage sehr viele mobile elektronische Endgeräte, insbesondere Smartphones und Tablet-Computer standardmäßig mit einer rückseitigen Kamera ausgerüstet sind und über leistungsstarke Prozessoren zur Verarbeitung der von der Kamera empfangenen Bildinformationen verfügen, und zudem auch elektronische Tickets vermehrt auf solche regelmäßig unterwegs mitgeführten Endgeräte geladen werden, ergibt sich eine bequeme und vielfältig nutzbare effiziente Lösung zur Personenführung in räumlich begrenzten Raumbereichen. Die erfindungsgemäße Beleuchtungseinrichtung stellt ein Element dieser Gesamtlösung dar und ermöglicht diese. Somit wird die Aufgabe gelöst.

Nachfolgend werden bevorzugte Ausführungsformen und Weiterbildungen der Beleuchtungseinrichtung beschrieben, die jeweils, soweit dies nicht ausdrücklich ausgeschlossen wird, beliebig miteinander sowie mit den im Weiteren beschriebenen anderen Aspekten der Erfindung kombiniert werden können.

Gemäß einer ersten bevorzugten Ausführungsform weist die wenigstens eine Lichtquelle eine Leuchtdiode (LED), insbesondere eine Weißlichtdiode, oder eine mehrere LEDs aufweisende Leuchtdiodenanordnung auf, die jeweils Licht im sichtbaren Wellenlängenbereich emittiert. Da Leuchtdioden im Vergleich zu anderen Leuchtmitteln bei vergleichbarer Leuchtstärke besonders geringen Energieverbrauch haben, erlaubt dies insbesondere batteriegetriebene Beleuchtungseinrichtungen mit langer Laufzeit bzw. ein Senken der Stromkosten gegenüber anderen Leuchtmitteln. LED-basierte batterie- oder akkubetriebene Beleuchtungseinrichtungen können auch besonders günstig zum Nachrüsten von bestehenden begrenzten Raumbereichen verwendet werden, wenn das Verlegen von Stromleitungen aufwändig oder gar unmöglich wäre, oder auch bei nur temporär vorhandenen Veranstaltungsbereichen unter freiem Himmel oder etwa in Zelten, oder in Transportmitteln ohne eigene Stromversorgung zumindest in Teilen derselben.

Gemäß einer weiteren bevorzugten Ausführungsform ist die Modulationsvorrichtung konfiguriert, das von der Lichtquelle ausgesendete Licht mit einer Modulationsfrequenz von wenigstens 30 Hz, bevorzugt von wenigstens 100 Hz zu besonders bevorzugt im Megahertzbereich zu modulieren, um die Daten aufzuprägen. Auf diese Weise liegt die Modulationsfrequenz oberhalb der typischerweise vom menschlichen Auge noch wahrnehmbaren Frequenz, so dass die Aufprägung von Daten auf das Licht erfolgen kann, ohne dass dies vom menschlichen Auge etwa als Flackern oder als andere Unregelmäßigkeit bei der Beleuchtung wahrgenommen wird. Die Verwendung höherer Frequenzen deutlich oberhalb dieser unteren Schwellen, insbesondere im Megahertzbereich, ist insbesondere dann vorteilhaft, wenn größere Datenmengen übertragen werden sollen, da die übertragbare Bandbreite (im Sinne einer Datenrate) frequenzabhängig ist.

Gemäß einer weiteren bevorzugten Ausführungsform weist die Beleuchtungseinrichtung des Weiteren eine Kommunikationsschnittstelle zur Verbindung der Beleuchtungseinrichtung mit einer oder mehreren Datenquellen für die Daten auf. Die Datenquelle kann dabei in einer Variante der Erfindung zusätzlich auch eine Datensenke sein, um von der Beleuchtungseinrichtung über die Kommunikationsschnittstelle ausgesendete Daten empfangen. Dabei sind unter dem Begriff "Datenquelle" in diesem Zusammenhang alle Arten von Einrichtungen bezeichnen, welche Daten oder Informationen bereitstellen. Hierzu zählen insbesondere, aber nicht ausschließlich Datenspeicher, Datenempfänger, die Daten von anderen Geräten oder Einrichtungen empfangen können, Datennetze, Server und dergleichen. Auf diese Weise ist es möglich anstelle oder zusätzlich zu einer festen Speicherung von Daten in der Beleuchtungseinrichtung, diese Daten auch von außerhalb der Beleuchtungseinrichtung, insbesondere auch dynamisch und somit veränderbar zur Verfügung zu stellen. So kann etwa bei einer Neuinstallation einer oder mehrerer erfindungsgemäßer Beleuchtungseinrichtungen in einem begrenzten Raumbereich eine erstmalige Initialisierung oder ein Umprogrammieren derselben effizient durch Datenübertragung von einer Datenquelle aus erfolgen, ohne dass dazu jede der Beleuchtungseinrichtungen selbst individuell vor Ort oder schon bei ihrer Herstellung einer Dateneinspeicherung unterzogen werden muss. Außerdem ist es möglich, die Beleuchtungseinrichtung über die Kommunikationsschnittstelle mit dem Internet zu verbinden, und so die Beleuchtungseinrichtung auch zum Aufbau und Betrieb einer Datenverbindung zwischen dem Internet und einem über das modulierte Licht mit der Beleuchtungseinrichtung in Kommunikationsverbindung stehenden Endgerät zu nutzen.

Gemäß einer weiteren bevorzugten Ausführungsform weist die Beleuchtungseinrichtung einen lichtempfindlichen Empfänger auf, mittelst dessen sie modulierte Lichtsignale, welchen Daten aufgeprägt sind, empfangen kann, sowie einen Demodulator zur Demodulation der Lichtsignale und zur Zurückgewinnung der dem Licht ausgeprägten Daten. Auf diese Weise kann zum Zwecke einer bidirektionalen Datenverbindung auch ein Rückkanal zur Datenübertragung zwischen einem mobilen elektronischen Endgerät mit Lichtquelle (insbesondere einer auch als Foto-Blitz oder "Taschenlampe" nutzbaren LED desselben, deren Licht moduliert werden kann, und der Beleuchtungseinrichtung sowie weiter über deren Kommunikationsschnittstelle mit einer externen Gegenstelle, beispielsweise dem Internet, aufgebaut werden.

Gemäß einer weiteren bevorzugten Ausführungsform weist die Beleuchtungseinrichtung des Weiteren eine Speichervorrichtung zum Speichern der Daten auf, wobei die Modulationsvorrichtung konfiguriert ist, durch Modulation des von der Lichtquelle ausgesendeten Lichts diesem die in der Speichervorrichtung gespeicherten Daten zumindest teilweise aufzuprägen. Auf diese Weise können lokal an der Beleuchtungseinrichtung die dem Licht aufzuprägenden Daten permanent oder zumindest temporär gespeichert werden, so dass die Beleuchtungseinrichtung auch autark ohne Anbindung an eine Datenquelle einsetzbar ist. Auch kann die Speichervorrichtung als Pufferspeicher eingesetzt werden, um über eine Datenverbindung zu empfangende Daten einer externen Datenquelle zwischenzupuffern, insbesondere bevor die Datenmodulation erfolgt.

Gemäß einer noch weiteren bevorzugten Ausführungsform ist die Modulationsvorrichtung in der Beleuchtungseinrichtung separat von der Lichtquelle vorgesehen und ausgestaltet, um eine Stromversorgung der Lichtquelle zu modulieren. Auf diese Weise lässt sich sehr einfach eine Modulation, insbesondere eine Amplituden-, d.h. Lichtstärkemodulation des von der Lichtquelle auszusenden Lichts erreichen. Dabei können die beiden Zustände "eingeschaltet" und "ausgeschaltet" insbesondere digitalen (genauer binären) Werten "1" bzw. "0" (oder umgekehrt) zugeordnet werden, um Dateneinheiten (Bits) darzustellen.

Ein zweiter Aspekt der Erfindung betrifft ein Verfahren zur Bereitstellung von Orientierungsinformationen in einem begrenzte Raumbereich, insbesondere in einem Personentransportmittel. Das Verfahren umfasst ein Modulieren des Lichts wenigstens einer in einem Personentransportmittel angeordneten Beleuchtungseinrichtung gemäß dem ersten Aspekt der Erfindung mit Daten, welche eine eindeutige Kennung der Beleuchtungseinrichtung enthalten oder eine räumliche Position der Beleuchtungseinrichtung innerhalb des begrenzten Raumbereichs kennzeichnen.

Gemäß einer bevorzugten Ausführungsform des Verfahrens umfasst dieses des Weiteren ein Empfangen von Belegungsinformationen, welche den Belegungszustand wenigstens eines Platzes für Personen innerhalb des begrenzten Raumbereichs kennzeichnen und mittels eines oder mehrerer dem Platz bzw. den Plätzen zugeordneten Belegungssensoren erfasst werden. Dabei erfolgt das Modulieren des von der Lichtquelle ausgesendeten Lichts so, dass die diesem aufgeprägten Daten Orientierungsdaten enthalten, welche in Abhängigkeit von den Belegungsinformationen bestimmt sind.

Das Verfahren stellt somit ein Verfahren zum Betrieb eine Beleuchtungseinrichtung gemäß dem ersten Aspekt Erfindung dar so dass die dort bereits dargestellten Erklärungen und Lehren auch für das Verfahren gleichermaßen gelten.

Ein dritter Aspekt der Erfindung betrifft ein Personentransportmittel, insbesondere ein Schienenfahrzeug, Flugzeug oder Schiff, mit wenigstens einer Beleuchtungseinrichtung gemäß dem ersten Aspekt der Erfindung. Derartige Personentransportmittel stellen einen begrenzten Raumbereich im Sinne der Erfindung dar. Sie können insbesondere auch mehrere begrenzte Raumbereiche, wie etwa Passagierbereiche (beispielsweise Wägen oder Abteile in einem Zug, Klassen oder Stockwerke in einem Flugzeug oder einer Fähre) enthalten. Bei vielen Personentransportmitteln, insbesondere bei Flugzeugen und Zügen mit Klassen oder Platzreservierungen ist zudem ein gültiges Ticket, auf dem ein bestimmter Passagierplatz (z.B. ein bestimmter Sitzplatz) oder ein bestimmter begrenzter Raumbereich (zum Beispiel ein Abteil oder eine Klasse) innerhalb des Personentransportmittels zugewiesen wird, eine Zugangsvoraussetzung. Dabei ist es oft für den Passagier nicht leicht, den Ort des Passagierplatzes oder begrenzten Raumbereichs innerhalb des Personentransportmittels bzw. den Weg vom Zugang dorthin zu finden. Ist das Personentransportmittel jedoch mit der erfindungsgemäßen Beleuchtungseinrichtung ausgestattet, so kann der zusteigende Passagier mithilfe seines erfindungsgemäßen mobilen elektronischen Endgeräts das von der Beleuchtungseinrichtung ausgesandte Licht, d.h. vor allem die darauf aufgeprägten Daten, empfangen und sich an seinem Endgerät darauf basierend die gewünschten Informationen für die Navigation zu seinem Passagierplatz oder Ziel-Aufenthaltsbereich innerhalb des Personentransportmittels ausgeben lassen.

Nachfolgend werden bevorzugte Ausführungsformen und Weiterbildungen des Personentransportmittels beschrieben, die jeweils, soweit dies nicht ausdrücklich ausgeschlossen wird, beliebig miteinander sowie mit den anderen Aspekten der Erfindung kombiniert werden können.

Gemäß einer bevorzugten Ausführungsform ist die Beleuchtungseinrichtung in einem Passagiertransportbereich des Personentransportmittels oder in einem Zugangsbereich zu demselben angeordnet. Auf diese Weise können die dem Licht aufgeprägten Daten gezielt an einem für Passagiere vorgesehenen Ort, insbesondere schon an einem Zugang zum Personentransportmittel zur Verfügung gestellt werden, was die lichtgesteuerte Personenführung bequemer und effizienter gestalten kann. Insbesondere kann dies dazu beitragen, das Passagiere die nötigen Informationen für das schnelle und fehlerfreie Auffinden ihres Platzes im Personentransportmittel so frühzeitig erhalten, dass zuvor keine falschen oder unnötigen Wege ein geschlagen werden, die zu erhöhten Laufzeiten, einem Umdrehen oder gar zu Staus führen können. Damit kann auch insgesamt die Boarding-Zeit (Gesamtzustiegszeit für alle Passagiere) verkürzt werden.

Gemäß einer weiteren bevorzugten Ausführungsform weist das Personentransportmittel des Weiteren einen oder mehrere Plätze (Passagierplätze, Abteile, Aufenthaltsräume usw.) für Personen, einen oder mehrere Belegungssensoren, mittels derer der Belegungszustand eines oder mehrerer der Plätze in Form von Belegungsinformationen erfasst werden kann, und Kommunikationsmittel zur zumindest teilweisen Übermittlung der Belegungsinformationen an die wenigstens eine Beleuchtungseinrichtung auf. Dabei ist die Modulationsvorrichtung der Beleuchtungseinrichtung des Weiteren konfiguriert, durch Modulation des von der Lichtquelle ausgesendeten Lichts diesem Daten aufzuprägen, welche in Abhängigkeit von den Belegungsinformationen bestimmt sind. Auf diese Weise kann das Personentransportmittel erfassen, welche Plätze im Personentransportmittel belegt bzw. noch nicht vollständig belegt oder frei sind. Über die dem von der Lichtquelle ausgesendeten Licht aufgeprägten Daten können diese Informationen an das mobile Endgerät eines Benutzers, insbesondere Passagiers, übertragen werden, so dass diesem auch Informationen ausgegeben werden können, die vom Belegungszustand des Personentransportmittels abhängen. So kann das Personentransportmittel insbesondere auch Informationen zu noch freien und damit für den Passagier verfügbaren Passagierplätzen übermitteln und am mobilen elektronischen Endgerät können daraus Ausgabedaten, welche Navigationshinweise zu einem freien, bevorzugt zu dem nächsten freien, Platz enthalten, bestimmt und ausgegeben werden.

Ein vierter Aspekt der Erfindung betrifft ein mobiles elektronisches Endgerät, insbesondere Smart-Device. Das Endgerät weist einen lichtempfindlichen Empfänger zum Empfang des von einer Beleuchtungseinrichtung gemäß dem ersten Aspekt der Erfindung in einem begrenzten Raumbereich, insbesondere in einem Personentransportmittel, ausgesandten Lichts. Darüber hinaus weist das Endgerät einen Demodulator zur Demodulation des von dem lichtempfindlichen Empfänger empfangenen Lichts und zur Rückgewinnung der darauf aufgeprägten Daten, eine Datenverarbeitungseinheit mit wenigstens einem Prozessor und eine Speichervorrichtung zur Speicherung von Referenzdaten bezüglich des begrenzten Raumbereichs. Die Speichervorrichtung enthält zudem ein oder mehrere Programme, die bei ihrer Ausführung in der Datenverarbeitungseinheit diese veranlassen, in Abhängigkeit von den Referenzdaten und von den durch die Demodulationsvorrichtung rückgewonnenen Daten Ausgabedaten zu erzeugen, welche eine räumliche Position der Beleuchtungseinrichtung, und somit auch eine zumindest ungefähre Position des Endgeräts, in dem Raumbereich oder Hinweise zur Navigation von dieser räumlichen Position aus zu einem mittels der Referenzdaten spezifizierten Navigationsziel innerhalb des Raumbereichs angeben. Schließlich weist das Endgerät auch eine Ausgabevorrichtung zur Ausgabe der Ausgabedaten auf. Durch die Verknüpfung der von der Beleuchtungseinrichtung empfangenen Daten einerseits und den Referenzdaten andererseits durch ein entsprechendes in der Datenverarbeitungseinheit ablaufendes Programm (insbesondere gemäß dem unten genannten fünften Aspekt der Erfindung) können die vom Benutzer benötigten Informationen, insbesondere zu seinem gegenwärtigen Standort oder Navigationshinweise zu einem Zielort (Navigationsziel) innerhalb des begrenzten Raumbereichs, bestimmt und über die Ausgabevorrichtung ausgegeben werden.

Nachfolgend werden bevorzugte Ausführungsformen und Weiterbildungen des Endgeräts beschrieben, die jeweils, soweit dies nicht ausdrücklich ausgeschlossen wird, beliebig miteinander sowie mit den anderen Aspekten der Erfindung kombiniert werden können.

Gemäß einer bevorzugte Ausführungsform ist der Demodulator als Teil der Datenverarbeitungseinheit ausgebildet. Er kann insbesondere als Computerprogramm vorliegen, welches auf einem oder mehreren Prozessoren der Datenverarbeitungseinheit abläuft und die vom lichtempfindlichen Empfänger erhaltenen Signale auswertet und die darauf aufgeprägten Daten rückgewinnt.

Gemäß einer weiteren bevorzugten Ausführungsform enthalten die Referenzdaten Daten, welche eine von der Beleuchtungseinrichtung ausgesandte Kennung mit der Position der Beleuchtungseinrichtung verknüpfen, so dass von der Kennung auf die Position geschlossen werden kann. Auf diese Weise muss die Beleuchtungseinrichtung selbst ihre Position gar nicht kennen. Eine eindeutige Kennung kann bereits bei der Herstellung oder später durch einmalige Konfiguration der Beleuchtungseinrichtung zugewiesen werden, was eine besonders einfache Handhabung und Installation ermöglicht.

Gemäß einer weiteren bevorzugen Ausführungsform spezifizieren die Referenzdaten ein elektronisches Ticket für den Zugang zu dem begrenzten Raumbereich, insbesondere in einem Personentransportmittel. Dabei kann das elektronische Ticket insbesondere auch eine Platzangabe oder Reservierung bzw. eine Beförderungsklasse oder einen für den Transport des Passagiers bestimmten begrenzten Raumbereich (zum Beispiel Abteil oder Aufenthaltsraum) innerhalb des Personentransportmittels für den Passagier spezifizieren. Auf diese Weise wird eine gezielte Personenführung zu dem im elektronischen Ticket angegebenen Zielort (zum Beispiel Passagierplatz oder Beförderungsklasse) ermöglicht.

Gemäß einer weiteren bevorzugten Ausführungsform weist die Ausgabevorrichtung eine Anzeigevorrichtung, wie etwa einen Bildschirm oder Signallampen, oder einen Tongeber, insbesondere ein Lautsprecher auf. Derartige Ausgabevorrichtungen insbesondere Bildschirme und Lautsprecher, sind regelmäßig auf handelsüblichen Smart Devices vorhanden, so dass keine zusätzliche Endgerät-Hardware erforderlich ist. Allerdings ist es auch möglich, das erfindungsgemäße mobile elektronische Endgerät in einer anderen Form denn als Smart Device auszuführen. So könnten solche Geräte zum Beispiel von einem Veranstalter oder von einem Betreiber eines Personentransportmittels an seine Besucher bzw. Passagiere ausgegeben werden, so dass auch solche Passagiere die Personenführung nutzen können, die nicht über ein Smart Device verfügen. So können auch kostengünstige, dedizierte Geräte mit begrenzterem Funktionsumfang als bei Smart Devices, sowie Geräte mit anderen Mensch-Maschine-Schnittstellen (MMI) zur Verfügung gestellt werden, als die bei Smart Devices üblichen, zum Beispiel um in ihrem Seh- oder Hörsinn behinderten Menschen besonders geeignete Schnittstellen zur Verfügung zu stellen.

Ein fünfter Aspekt der Erfindung betrifft schließlich ein Computerprogramm zur Ausführung auf einem mobilen elektronischen Endgerät gemäß dem vierten Aspekt der Erfindung. Das Computerprogramm weist Anweisungen auf, die bei ihrer Ausführung auf einer Datenverarbeitungseinheit des Endgeräts dieses veranlassen die folgenden Schritte auszuführen:
Empfangen des von einer Beleuchtungseinrichtung gemäß dem ersten Aspekt der Erfindung ausgesendeten Lichts mithilfe des lichtempfindlichen Empfängers des Endgeräts;
Demodulieren des von dem lichtempfindlichen Empfänger empfangenen Lichts und Rückgewinnen der darauf aufgeprägten Daten;
Erzeugen von Ausgabedaten, welche eine zumindest ungefähre räumliche Position des Endgeräts in dem Raumbereich oder Hinweise zur Navigation von dieser räumlichen Position aus zu einem mittels der Referenzdaten spezifizierten Navigationsziel innerhalb des Raumbereichs angeben, in Abhängigkeit von in der Speichervorrichtung abgelegten Referenzdaten und von den durch die Demodulationsvorrichtung rückgewonnenen Daten; und
Ausgeben der Ausgabedaten an der Ausgabevorrichtung des Endgeräts.

Das erfindungsgemäße Computerprogramm ist folglich dazu vorgesehen und geeignet, ein Endgerät gemäß dem vierten Aspekt der Erfindung so zu steuern, dass im Zusammenwirken mit einer Beleuchtungseinrichtung gemäß dem ersten Aspekt der Erfindung bzw. einem Verfahren zum Betrieb desselben gemäß dem zweiten Aspekt der Erfindung, welche jeweils insbesondere in einem Personentransportmittel gemäß dem dritten Aspekt der Erfindung zum Einsatz kommen können, eine lichtgesteuerte Personenführung ermöglicht wird.

Gemäß einer bevorzugten Ausführungsform des Computerprogramms, umfasst das Rückgewinnen der dem Licht aufgeprägten Daten ein Rückgewinnen von Belegungsinformationen zu einem Belegungszustand von wenigstens einem Platz für Personen innerhalb des begrenzten Raumbereichs und das Erzeugen der Ausgabedaten erfolgt basierend auf den Belegungsinformationen. Dies kann insbesondere so erfolgen, dass die resultierenden Ausgabedaten auf einen oder mehrere noch unbelegte Plätze in dem Raumbereich bzw. auf den einzuschlagenden Weg dorthin hinweisen. Für weitere Einzelheiten hierzu wird auf die vorausgehenden Ausführungen zu korrespondierenden Ausführungsformen der anderen Aspekte der Erfindung verwiesen.

Weitere Vorteile, Merkmale und Anwendungsmöglichkeiten der vorliegenden Erfindung ergeben sich aus der nachfolgenden Beschreibung im Zusammenhang mit den Figuren.

Dabei zeigt:
- Fig. 1: eine schematische Darstellung eines Gesamtsystems zur lichtgesteuerten Personenführung zur Illustration bevorzugter Ausführungsformen mehrerer Aspekte der vorliegenden Erfindung;
- Fig. 2: eine schematische Darstellung eines Personentransportmittels gemäß einer bevorzugten Ausführungsform des dritten Aspekts der vorliegenden Erfindung, wobei der begrenzte Raumbereich durch einen Zug mit mehreren Wagons definiert ist;
- Fig. 3: schematisch eine beispielhafte Darstellung von Ausgabedaten auf einem Bildschirm eines Endgeräts gemäß einer bevorzugten Ausführungsform gemäß dem vierten Aspekt und dem fünften Aspekt der vorliegenden Erfindung;
- Fig. 4: ein Flussdiagramm zur Illustration einer bevorzugten Ausführungsform eines Verfahrens gemäß dem zweiten Aspekt der vorliegenden Erfindung;
- Fig. 5: ein Flussdiagramm zur Illustration eines durch ein Computerprogramm gemäß dem fünften Aspekt der vorliegenden Erfindung gesteuerten Verfahrens zum Betrieb eines erfindungsgemäßen Endgeräts gemäß dem vierten Aspekt der vorliegenden Erfindung.

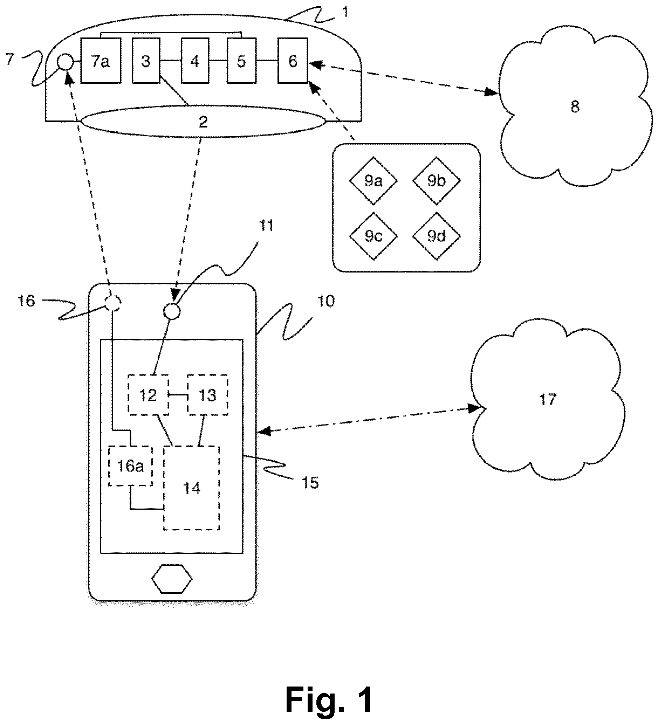

In **Fig. 1** ist ein Gesamtsystem zur lichtgesteuerten Personenführung gemäß einer bevorzugten Ausführungsform der Erfindung schematisch dargestellt. Das Gesamtsystem enthält dabei wenigstens eine erfindungsgemäße Beleuchtungseinrichtung 1 sowie ein erfindungsgemäßes mobiles elektronisches Endgerät 10. Darüber hinaus können Belegungssensoren, hier beispielhaft vier Belegungssensoren 9a bis 9d, vorgesehen sein, mit denen die Belegung von Plätzen in einem begrenzten räumlichen Raumbereich erfasst werden kann. Die Beleuchtungseinrichtung 1 weist dabei eine Lichtquelle 2, eine dieser zugeordnete Modulationsvorrichtung 4 zum Modulieren des von der Lichtquelle 2 ausgesandten Lichts mittels Ein- und Ausschalten einer Stromversorgung 3 der Lichtquelle 2, eine Speichervorrichtung 5 sowie eine Kommunikationsschnittstelle 6 zur Verbindung (mit gestricheltem Pfeil gekennzeichnet) mit einer oder mehreren externen Datenquellen und/oder Datensenken 8 sowie den Belegungssensoren 9a bis 9d auf. Die Datenquellen bzw. - senken 8 können dabei insbesondere einen Server oder Netzwerk, insbesondere das Internet sein und die von der Beleuchtungseinrichtung 1 an das Endgerät 10 mittels Licht zu übertragenden Daten zumindest teilweise zur Verfügung stellen. Die Anbindung der Belegungssensoren kann in einer Variante stattdessen auch über eine oder mehrere separate weitere Schnittstellen erfolgen.

Außerdem enthält die Beleuchtungseinrichtung 1 einen lichtempfindlichen Empfänger 7 zum Empfang von Licht, welches von dem Endgerät 10 ausgesandt wird, sowie einen Demodulator 7a. Der Demodulator 7a ist ausgebildet, aus dem vom Empfänger 7 empfangenen Licht Daten durch Demodulation rückzugewinnen, die dem Licht durch Modulation aufgeprägt sind. Auf diese Weise lässt sich zwischen dem Endgerät 10 und der Beleuchtungseinrichtung 1 ein Rückkanal einer Datenverbindung bewerkstelligen.

Das Endgerät 10 weist einem lichtempfindlichen Empfänger 11 auf, der insbesondere durch eine Kamera des Endgeräts, wie sie etwa bei Smartphones und Tablet Computern üblich ist, implementiert sein kann. Der Empfänger 11 ist mit einem Demodulator 12 gekoppelt, der ausgebildet ist, aus dem vom Empfänger 11 empfangenen Licht Daten durch Demodulation rückzugewinnen, die dem Licht durch Modulation mittels des Modulators 4 der Beleuchtungseinrichtung 1 aufgeprägt wurden. Des Weiteren enthält das Endgerät 10 eine Speichervorrichtung 13, die insbesondere als DRAM oder Flash-Speicher ausgebildet sein kann. Die Speichervorrichtung 1 kann dabei mehrere Zwecke erfüllen. Zum einen kann darin ein Computerprogramm abgelegt sein, mittels dessen das Endgerät die von der Beleuchtungseinrichtung 1 empfangenen Daten verarbeiten und Ausgabedaten umwandeln kann. Des Weiteren kann die Speichervorrichtung 13 dazu dienen, Referenzdaten abzuspeichern. Referenzdaten können insbesondere elektronische Tickets oder andere Zugangsberechtigungen sein, oder auch Daten, welche Kennungen von Beleuchtungseinrichtungen 1 mit deren Position im begrenzten Raumbereich verknüpfen, oder Daten, die zur Erzeugung von Ausgabedaten verwendet werden können, wie beispielsweise für Texthinweise oder grafische Symbole. Diese Referenzdaten können bevorzugt über eine Kommunikationsschnittstelle des Endgeräts (beispielsweise für WLAN, Bluetooth oder für zellularen Mobilfunk) von einer externen Datenquelle 17, insbesondere aus dem Internet oder einem Server des Betreibers des Personenführungssystems, geladen werden. Außerdem kann die Speichervorrichtung 13 zur zumindest temporären Speicherung der Daten verwendet werden, welche aus dem von der Beleuchtungseinrichtung 1 empfangenen Licht rückgewonnenen wurden.

Zudem enthält das Endgerät 10 eine Datenverarbeitungseinheit 14, welche wenigstens einen Prozessor aufweist, der mit der Speichervorrichtung 13 gekoppelt ist. In einer Variante ist die Speichervorrichtung 13 selbst Teil der Datenverarbeitungseinheit 14. Die Datenverarbeitungseinheit 14 ist dazu vorgesehen und geeignet, das in der Speichervorrichtung 13 abgelegte Computerprogramm auszuführen und dadurch das Endgerät 10 zu steuern sowie durch Verarbeitung der empfangenen Daten und der Referenzdaten Ausgabedaten zu erzeugen und diese auf einem als Ausgabevorrichtung dienenden Bildschirm 15 des Endgeräts 10 auszugeben.

Schließlich weist das Endgerät 10 auch eine Lichtquelle 16 auf, die mit einem Modulator 16a gekoppelt ist, welcher wiederum durch die Datenverarbeitungseinheit 14 angesteuert wird oder der Teil derselben ist. Auf diese Weise kann durch die Lichtquelle 16 von dem Endgerät 10 Licht an die Beleuchtungseinrichtung 1 zurück gesendet werden, welches durch den Modulator 16a so moduliert ist, dass diesem von der Datenverarbeitungseinheit 14 bereitgestellte Daten aufgeprägt sind. Im Zusammenspiel mit dem Empfänger 7 und dem Demodulator 7a der Beleuchtungseinrichtung 1 kann so der bereits genannte Rückkanal bereitgestellt werden.

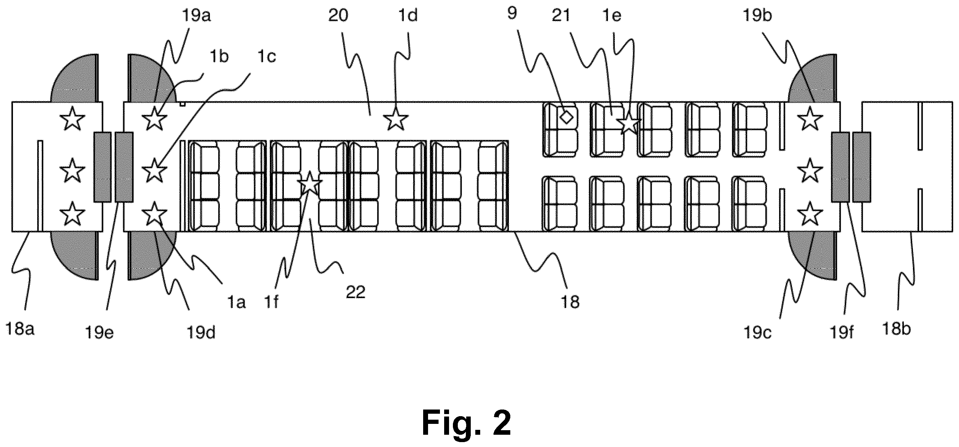

**Fig. 2** zeigt eine schematische Darstellung eines Personentransportmittels gemäß einer bevorzugten Ausführungsform des dritten Aspekts der vorliegenden Erfindung, wobei der begrenzte Raumbereich durch das Innere eines Zugs mit mehreren Wagons definiert ist, von denen in Fig. 2 exemplarisch ein erster Waggon 18 vollständig sowie zwei weitere Waggons 18a und 18b teilweise dargestellt sind. Der Waggon 18 weist vier Zugänge (Zustiege) 19a bis 19d sowie zwei Verbindungstüren 19e und 19f zu den benachbarten Waggons 18a bzw. 18b auf. Mit Sternsymbolen sind bevorzugte Positionen für die Anordnung der erfindungsgemäßen Beleuchtungseinrichtungen 1 gekennzeichnet. Insbesondere ist es zweckmäßig, die Beleuchtungseinrichtungen 1 in der Nähe der Zugänge 19a bis 19d (Positionen 1a und 1 b) sowie den Verbindungstüren 19e und 19f (Position 1 c) anzuordnen. Darüberhinaus können Positionen 1 b in einem Gang 20 des Waggons, Positionen 1e an einem Passagiersitz 21 oder Positionen 1f in einem Abteil 22 des Waggons 18 zweckmäßig sein (der Übersichtlichkeit wegen ist in Figur 2 nur jeweils eine solche Position 1 d, 1 e bzw. 1f eingezeichnet).

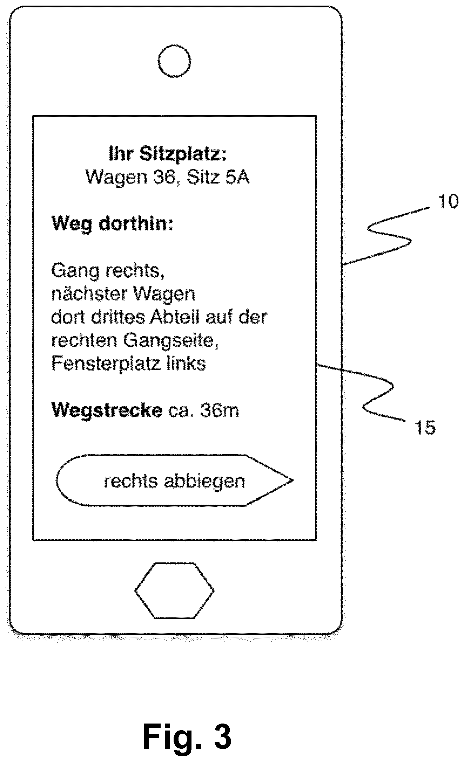

**Fig. 3** zeigt schematisch eine beispielhafte Darstellung von Ausgabedaten auf dem Bildschirm 15 des Endgeräts 10. Die Ausgabedaten dienen dabei dazu, den Bildschirm 15 so anzusteuern, dass dieser den gemäß einem in den Referenzdaten enthaltenen elektronischen Ticket reservierten Sitzplatz des Benutzers sowie Informationen und Symbole, welche den Weg dorthin beschreiben, anzeigt. Daneben ist eine Vielzahl anderer Darstellungs- und Hinweisvarianten denkbar, einschließlich solcher, die neben oder anstelle des durch den Bildschirm 15 ansprechbaren Sehsinns andere menschliche Sinne ansprechen, insbesondere den Hörsinn (zum Beispiel über einen Lautsprecher als Ausgabevorrichtung) oder den Tastsinn (zum Beispiel über Vibrationssignale, die durch den bei Smart Devices üblichen Vibrationsgenerator erzeugt werden).

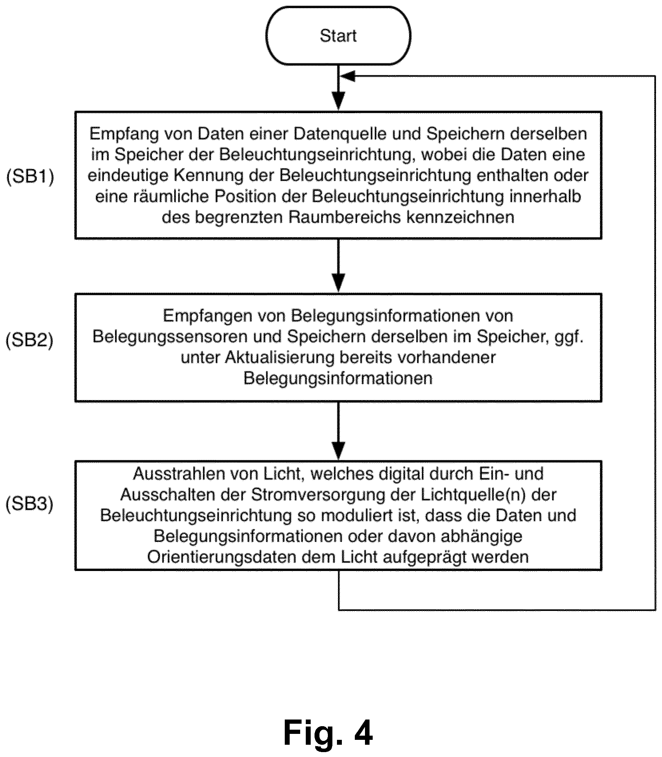

**Fig. 4** zeigt ein Flussdiagramm zur Illustration einer bevorzugten Ausführungsform eines Verfahrens zum Betrieb der Beleuchtungseinrichtung 1. Dabei werden in einem ersten Schritt SB1 Daten von der Datenquelle 8 (vergleiche Fig. 1) empfangen und diese Daten werden in der Speichervorrichtung 5 der Beleuchtungseinrichtung 1 abgelegt. Dabei enthalten diese Daten eine eindeutige Kennung der Beleuchtungseinrichtung 1 und/oder eine räumliche Position derselben innerhalb des im vorliegenden Beispiel durch das Innere des Zuges definierten begrenzten Raumbereichs. In einem weiteren Schritt SB2, der vor, gleichzeitig oder nach dem Schritt SB1 erfolgen kann, werden von den Bewegungssensoren 9a bis 9d über die Kommunikationsschnittstelle 6 Belegungsinformationen über die Belegung der Sitzplätze 21 im Zug empfangen und auch diese Belegungsinformationen werden in der Speichervorrichtung 5 abgelegt, wobei dort gegebenenfalls bereits gespeicherte Belegungsinformationen überschrieben bzw. aktualisiert werden. In einem weiteren Schritt SB3 wird durch die Lichtquelle 2 Licht ausgestrahlt, welches durch ein- und ausschalten der Stromversorgung 3 der Lichtquelle 2 moduliert ist. Dadurch wird die Modulation digital ausgeführt, wobei ein Einschalten der Stromversorgung der Lichtquelle zu einem Senden des entsprechenden Lichtsignals führt, was als logisch "1" interpretiert werden kann, während ein Ausschalten der Stromversorgung zu einem Unterbrechen des Lichtsignals führt, was als logisch "0" interpretiert werden kann (auch die entgegengesetzte Kodierung bei der "1" und "0" in ihrer Rolle vertauscht sind, ist gleichermaßen möglich). Somit können auf einfache Weise dem Licht digital vorliegende Daten aufgeprägt werden. Die Daten enthalten dabei die Belegungsinformationen oder davon abhängige Orientierungsdaten, die beispielsweise durch Zusammenfassung der von den einzelnen von den Belegungssensoren 9 bzw. 9a bis 9d stammenden Belegungsinformationen in optionalen Logikeinheiten in der Beleuchtungseinrichtung gewonnen werden. Wenn die Datenübertragung erfolgt ist, kann das Verfahren enden oder bevorzugt, wie in Figur 4 dargestellt, wieder zu seinem Ausgangspunkt zurückkehren, um zum einen gegebenenfalls neue Daten von der Datenquelle 8 zu empfangen und zum anderen auch weiteren Passagieren die Informationen per Lichtübertragung zur Verfügung zu stellen.

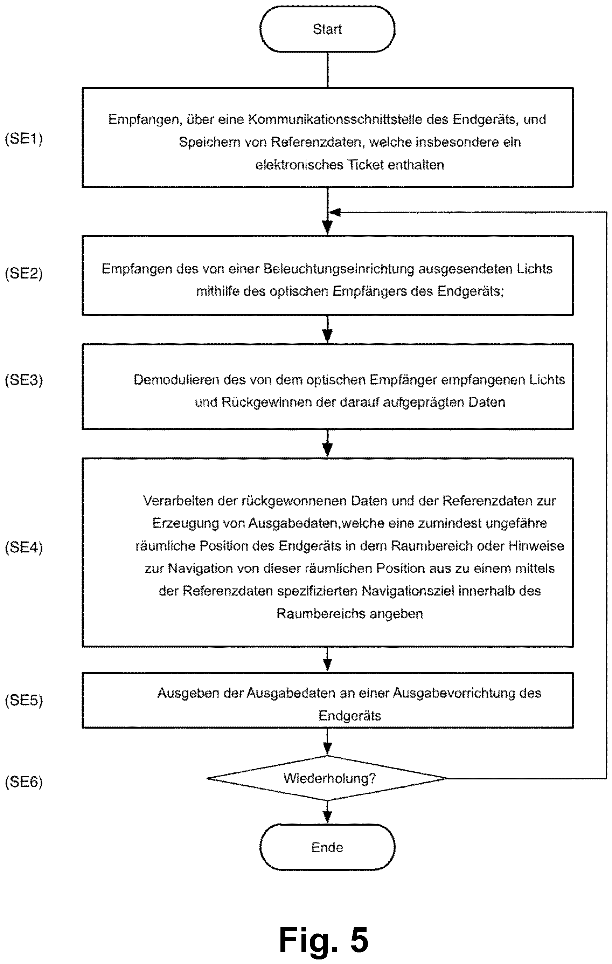

**Fig. 5** zeigt ein Flussdiagramm zur Illustration eines durch ein Computerprogramm gemäß einer bevorzugten Ausführungsform der Erfindung gesteuerten Verfahrens zum Betrieb eines erfindungsgemäßen Endgeräts 10. Dabei steuern die Anweisungen des in der Datenverarbeitungseinheit 14 des Endgeräts 10 ablaufenden Computerprogramms, welches in der Speichervorrichtung 13 des Endgeräts 10 abgelegt ist, das Endgeräts 10 so, dass dieses die nachfolgend beschriebenen Schritte ausführt.

Zunächst werden in einem Schritt SE1 über eine Kommunikationsschnittstelle des Endgeräts 10 Referenzdaten, welche insbesondere ein elektronisches Ticket enthalten können, empfangen und in der Speichervorrichtung 13 gespeichert. In einem weiteren Schritt SE2 wird mithilfe des lichtempfindlichen Empfängers 11 des Endgeräts 10 das von einer Beleuchtungseinrichtung 1 ausgesendete Licht empfangen. Daraufhin werden in einem weiteren Schritt SE3 das empfangene Licht demoduliert und die darauf aufgedeckten Daten so rückgewonnen. In der Datenverarbeitungseinheit 14 des Endgeräts werden sodann die rückgewonnenen Daten und die Referenzdaten zur Erzeugung von Ausgabedaten verarbeitet. Soweit die zurück gewonnenen Daten dabei eine Kennung der Beleuchtungseinrichtung 1 enthalten, kann diese Kennung mithilfe von Referenzdaten, welche eine Zuordnung der Kennung zu einer räumlichen Position im begrenzten Raumbereich, d.h. hier im Zug enthalten, zur Identifikation der räumlichen Position der Beleuchtungseinrichtung 1 und damit auch der zumindest ungefähren Position des damit kommunizieren Endgeräts 10 herangezogen werden. Die erzeugten Ausgabedaten können dann die zumindest ungefähre räumliche Position des Endgeräts und/oder Hinweise zur Navigation von dieser Position aus zu einem mittels der Referenzdaten spezifizierten Navigationsziel, insbesondere einem gemäß dem elektronischen Ticket reservierten oder gemäß von in den rückgewonnenen Daten enthaltenen Belegungsinformationen noch freien Sitzplatz im Zug, enthalten. Diese Ausgabedaten können in einem weiteren Schritt SE5, beispielsweise wie in Fig. 3 dargestellt, am Bildschirm 15 des Endgeräts 10 ausgegeben werden. In einem weiteren Schritt SE6 kann optional dem Benutzer des Endgeräts 10 die Möglichkeit gegeben werden, insbesondere durch Auswählen einer entsprechenden am Bildschirm 15 angezeigten Option, das Verfahren zu wiederholen, insbesondere wenn der Benutzer bei einer weiteren Beleuchtungseinrichtung 1 angelangt ist oder falls das Verfahren im gerade absolvierten Durchgang nicht erfolgreich war. Letzteres kann insbesondere der Fall sein, wenn die Datenübertragung zwischen der Beleuchtungseinrichtung 1 und dem Endgerät 10 fehlerhaft oder gar unterbrochen war.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zur Implementierung mindestens einer beispielhaften Ausführungsform liefern, wobei es sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand sowie seinen rechtlichen Äquivalenten abgewichen wird.

### Bezugszeichenliste:

- 1: Beleuchtungseinrichtung
- 1a-f: bevorzugte Positionen für die Beleuchtungseinrichtung(en)
- 2: Lichtquelle der Beleuchtungseinrichtung
- 3: Stromversorgung der Lichtquelle der Beleuchtungseinrichtung
- 4: Modulationsvorrichtung der Beleuchtungseinrichtung
- 5: Speichervorrichtung der Beleuchtungseinrichtung
- 6: Kommunikationsschnittstelle der Beleuchtungseinrichtung
- 7: Lichtempfindlicher Empfänger der Beleuchtungseinrichtung
- 7a: Demodulator der Beleuchtungseinrichtung
- 8: Externe Datenquelle und/oder -senke
- 9, 9a - 9d: Belegungssensoren
- 10: Mobiles elektronisches Endgerät
- 11: Lichtempfindlicher Empfänger des Endgeräts, insbesondere Kamera
- 12: Demodulator des Endgeräts
- 13: Speichervorrichtung des Endgeräts
- 14: Datenverarbeitungseinheit
- 15: Bildschirm
- 16: Lichtquelle des Endgeräts
- 16a: Modulator des Endgeräts
- 17: Datenquelle für Referenzdaten
- 18,18a,18b: begrenzter Raumbereich, insbesondere Waggons eines Personenzugs
- 19a-d: Zugänge zum Waggon
- 19e, 19f: Verbindungstüren zu benachbarten Waggons
- 20: Gang im Waggon
- 21: Sitzplatz
- 22: Abteil

## Patentansprüche

1. System zur Bereitstellung von Orientierungsinformationen bezüglich eines begrenzten Raumbereichs (18, 18a, 18b),
**gekennzeichnet durch**
eine Beleuchtungseinrichtung (1) und
ein mobiles elektronisches Endgerät (10), insbesondere Smart-Device,
wobei die Beleuchtungseinrichtung (1) umfasst:
wenigstens eine Lichtquelle (2); und
eine Modulationsvorrichtung (4) zum Modulieren des von der Lichtquelle (2) ausgesendeten Lichts;
wobei die Modulationsvorrichtung (4) konfiguriert ist, durch Modulation des von der Lichtquelle (2) ausgesendeten Lichts diesem Daten aufzuprägen, welche eine eindeutige Kennung der Beleuchtungseinrichtung (1) enthalten oder eine räumliche Position der Beleuchtungseinrichtung (1) innerhalb des begrenzten Raumbereichs (18,18a, 18b) kennzeichnen;
wobei das mobile elektronische Endgerät (10) umfasst:
einen lichtempfindlichen Empfänger (11) zum Empfang des von der Beleuchtungseinrichtung (1) in dem begrenzten Raumbereich (18,18a,18b) ausgesandten Lichts;
einen Demodulator (12) zur Demodulation des von dem lichtempfindlichen Empfänger (11) empfangenen Lichts und zur Rückgewinnung der darauf aufgeprägten Daten;
eine Speichervorrichtung (13) zur Speicherung von Referenzdaten bezüglich des begrenzten Raumbereichs (18, 18a, 18b); und
eine Datenverarbeitungseinheit (14) mit einem oder mehreren Programmen zur Erzeugung von Ausgabedaten durch die Datenverarbeitungseinheit (14) in Abhängigkeit der Referenzdaten und der durch den Demodulator (12) rückgewonnenen Daten, wobei die Ausgabedaten eine zumindest ungefähre räumliche Position (1a,...,1f) der Beleuchtungseinrichtung in dem Raumbereich (18,18a,18b) oder Hinweise zur Navigation von dieser räumlichen Position aus zu einem mittels der Referenzdaten spezifizierten Navigationsziel innerhalb des Raumbereichs (18,18a,18b) angeben.

2. System nach Anspruch 1, wobei die Referenzdaten insbesondere ein elektronisches Ticket für den Zugang zu dem begrenzten Raumbereich (18,18a,18b) spezifizieren können.

3. System nach einem der vorausgehenden Ansprüche, wobei die Datenverarbeitungseinheit (14) wenigstens einen Prozessor umfasst, und/oder wobei das mobile elektronische Endgerät (10) eine Ausgabevorrichtung (15) zur Ausgabe der Ausgabedaten umfasst.

4. System nach einem der vorausgehenden Ansprüche,
wobei die wenigstens eine Lichtquelle (2) eine Leuchtdiode aufweist, die Licht im sichtbaren Wellenlängenbereich emittiert.

5. System nach einem der vorausgehenden Ansprüche, wobei die Modulationsvorrichtung (4) konfiguriert ist, das von der Lichtquelle (2) ausgesendete Licht mit einer Modulationsfrequenz von wenigstens 30 Hz, bevorzugt von wenigstens 100 Hz zu besonders bevorzugt im Megahertzbereich, zu modulieren, um die Daten aufzuprägen.

6. System nach einem der vorausgehenden Ansprüche, wobei die Beleuchtungseinrichtung (1) des Weiteren eine Kommunikationsschnittstelle (6) zur Verbindung der Beleuchtungseinrichtung (1) mit einer oder mehreren Datenquellen (8) für die Daten aufweist.

7. System nach einem der vorausgehenden Ansprüche, wobei die Beleuchtungseinrichtung (1) des Weiteren eine Speichervorrichtung (5) zum Speichern der Daten aufweist;
wobei die Modulationsvorrichtung (4) konfiguriert ist, durch Modulation des von der Lichtquelle (2) ausgesendeten Lichts diesem die in der Speichervorrichtung (5) gespeicherten Daten zumindest teilweise aufzuprägen.

8. System nach einem nach einem der vorausgehenden Ansprüche, wobei die Modulationsvorrichtung (4) separat von der Lichtquelle (2) vorgesehen und ausgestaltet ist, um eine Stromversorgung (3) der Lichtquelle (2) zu modulieren.

9. Verfahren zur Bereitstellung von Orientierungsinformationen in einem begrenzten Raumbereich (18,18a,18b), insbesondere in einem Personentransportmittel, umfassend:
Modulieren (SB3) des Lichts wenigstens einer in einem Personentransportmittel angeordneten Beleuchtungseinrichtung (1) eines Systems nach einem der Ansprüche 1 bis 8 mit Daten, welche eine eindeutige Kennung der Beleuchtungseinrichtung (1) enthalten oder eine räumliche Position der Beleuchtungseinrichtung (1) innerhalb des begrenzten Raumbereichs (18,18a, 18b) kennzeichnen.

10. Verfahren gemäß Anspruch 9 des Weiteren umfassend:
Empfangen (SB2) von Belegungsinformationen, welche den Belegungszustand wenigstens eines Platzes (21, 22) für Personen innerhalb des begrenzten Raumbereichs (18,18a, 18b) kennzeichnen, und mittels eines oder mehrerer dem Platz bzw. den Plätzen (21, 22) zugeordneten Belegungssensoren (9, 9a - 9d) erfasst werden; und
Modulieren (SB3) des von der Lichtquelle (12) ausgesendeten Lichts so, dass die diesem aufgeprägten Daten Orientierungsdaten enthalten, welche in Abhängigkeit von den Belegungsinformationen bestimmt sind.

11. Verwendung des Systems nach einem der Ansprüche 1 bis 8 für ein Personentransportmittel, insbesondere Schienenfahrzeug, Flugzeug oder Schiff.

12. Verwendung nach Anspruch 11, wobei die Beleuchtungseinrichtung (1) in einem Passagiertransportbereich (18,18a,18b) des Personentransportmittels oder in einem Zugangsbereich zu demselben angeordnet ist.

13. Verwendung nach Anspruch 11 oder 12, wobei das Personentransportmittel des Weiteren aufweist:
ein oder mehrere Plätze (21, 22) für Personen,
ein oder mehrere Belegungssensoren (9, 9a - 9d), mittels derer der Belegungszustand eines oder mehrerer der Plätze (21, 22) in Form von Belegungsinformationen erfasst werden kann; und
Kommunikationsmittel zur zumindest teilweisen Übermittlung der Belegungsinformationen an die wenigstens eine Beleuchtungseinrichtung (1);
wobei die Modulationsvorrichtung (4) der Beleuchtungseinrichtung (1) des Weiteren konfiguriert ist, durch Modulation des von der Lichtquelle (2) ausgesendeten Lichts diesem Daten aufzuprägen, welche in Abhängigkeit von den Belegungsinformationen bestimmt sind.

14. Computerprogramm zur Ausführung auf einem mobilen elektronischen Endgerät (10) eines Systems gemäß einem der Ansprüche 1 bis 8, aufweisend Anweisungen, die bei ihrer Ausführung auf einer Datenverarbeitungseinheit (14) des Endgeräts (10) dieses veranlassen die folgenden Schritte auszuführen:
Empfangen (SE1) des von einer Beleuchtungseinrichtung (1) gemäß einem der Ansprüche 1 bis 6 ausgesendeten Lichts mithilfe des lichtempfindlichen Empfängers (11) des Endgeräts (10);
Demodulieren (SE3) des von dem lichtempfindlichen Empfänger (11) empfangenen Lichts und Rückgewinnen der darauf aufgeprägten Daten;
Erzeugen (SE4) von Ausgabedaten, welche eine zumindest ungefähre räumliche Position (1a,..,1f) der Beleuchtungseinrichtung (1) in dem Raumbereich (18,18a,18b) oder Hinweise zur Navigation von dieser räumlichen Position (1a,..,1f) aus zu einem mittels der Referenzdaten spezifizierten Navigationsziel innerhalb des Raumbereichs (18,18a,18b) angeben, in Abhängigkeit von in der Speichervorrichtung (13) abgelegten Referenzdaten und von den durch die Demodulationsvorrichtung (12) rückgewonnenen Daten; und
Ausgeben (SE5) der Ausgabedaten an einer Ausgabevorrichtung (15) des Endgeräts (10).

15. Computerprogramm gemäß Anspruch 14, wobei das Rückgewinnen (SE3) der dem Licht aufgeprägten Daten ein Rückgewinnen von Belegungsinformationen zu einem Belegungszustand von wenigstens einem Platz (21, 22) für Personen innerhalb des begrenzten Raumbereichs (18,18a,18b) umfasst; und
das Erzeugen (SE5) der Ausgabedaten basierend auf den Belegungsinformationen so erfolgt, dass die resultierenden Ausgabedaten auf einen oder mehrere noch unbelegte Plätze (21, 22) in dem Raumbereich (18,18a,18b) hinweisen.

## Claims

1. A system for providing orientation information with regard to a limited spatial area (18, 18a, 18b),
**characterized by**
an illumination means (1), and
a mobile electronic terminal device (10), in particular a Smart-Device,
wherein the illumination means (1) comprises:
at least one light source (2); and
a modulation device (4) for modulating the light transmitted by the light source (2);
wherein the modulation device (4) is configured, by modulating the light transmitted by the light source (2), to encode data to the light which data contain a unique identification of the illumination means (1) or identify a spatial position of the illumination means (1) within the limited spatial area (18, 18a, 18b);
wherein the mobile electronic terminal device (10) comprises:
a light-sensitive receiver (11) for receiving the light transmitted by the illumination means (1) in the limited spatial area (18, 18a, 18b);
a demodulator (12) for demodulating the light received by the light-sensitive receiver (11) and for retrieving the data encoded to the light;
a storage device (13) for storing reference data with regard to the limited spatial area (18, 18a, 18b); and
a data processing unit (14) having one or a plurality of programs for generating output data by the data processing unit (14) as a function of the reference data and the data retrieved by the demodulator (12), wherein the output data indicate at least an approximate spatial position (1a, ..., 1f) of the illumination means in the spatial area (18, 18a, 18b) or details for navigating from this spatial area to a navigation target within the spatial area (18, 18a, 18b) specified by the reference data.

2. The system according to claim 1, wherein the reference data can specify in particular an electronic ticket for access to the limited spatial area (18, 18a, 18b).

3. The system according to any one of the preceding claims, wherein the data processing unit (14) comprises at least one processor, and/or
wherein the mobile electronic terminal device (10) comprises an output device (15) for outputting the output data.

4. The system according to any one of the preceding claims,
wherein the at least one light source (2) comprises a light-emitting diode which emits light in the visible wavelength range.

5. The system according to any one of the preceding claims, wherein the modulation device (4) is configured to modulate the light transmitted by the light source (2) at a modulation frequency of at least 30 Hz, preferably at least 100 Hz, particularly preferably in the Megahertz range, in order to encode data.

6. The system according to any one of the preceding claims, wherein the illumination unit (1) further comprises a communication interface (6) for connecting the illumination means (1) with one or a plurality of data sources (8) for the data.

7. The system according to any one of the preceding claims, wherein the illumination means (1) further comprises a storage device (5) for storing the data;
wherein the modulation device (4) is configured, by modulating the light transmitted by the light source (2), to at least partially encode the data stored in the storage device (5) to the light.

8. The system according to any one of the preceding claims, wherein the modulation device (4) is provided separately from the light source (2) and is configured to modulate a power supply (3) of the light source (2).

9. A method for providing orientation information in a limited spatial area (18, 18a, 18b), in particular in a passenger transportation means, comprising:
modulating (SB3) the light of at least one illumination means (1) of a system according to any one of claims 1 to 8, arranged in a passenger transportation means, using data which contain a unique identification of the illumination means (1) or identify a spatial position of the illumination means (1) within the limited spatial area (18, 18a, 18b).

10. The method according to claim 9, further comprising:
receiving (SB2) of occupancy information which identify the occupancy status of a least one seat (21, 22) for passengers within the limited spatial area (18, 18a, 18b) and are acquired by means of occupancy sensors (9, 9a - d) associated with one or a plurality of seat and/or seats (21, 22); and
modulating (SB3) the light transmitted by the light source (2) such that the data encoded to the light contain orientation data which are determined as a function of the occupancy information.

11. A use of the system according to any one of claims 1 to 8 for a passenger transportation means, in particular a rail vehicle, aircraft or ship.

12. The use according to claim 11, wherein the illumination means (1) is arranged in a passenger transportation area (18, 18a, 18b) of the passenger transportation means or in an entrance area to the latter.

13. The use according to claim 11 or 12, wherein the passenger transportation means further comprises:
one or a plurality of seats (21, 22) for passengers;
one or a plurality of occupancy sensors (9, 9a - d) by means of which the occupancy status of one or a plurality of seats (21, 22) can be acquired in the form of occupancy information; and
communication means for at least partially transmitting the occupancy information to the at least one illumination means (1);
wherein the modulation device (4) of the illumination means (1) is further configured, by modulating the light transmitted by the light source (2), to encode data to the light which data are determined as a function of the occupancy information.

14. A computer program for execution on a mobile electronic terminal device (10) of a system according to any one of claims 1 to 8, comprising instructions which, when being executed on a data processing unit (14) of the terminal device (10), cause the latter to carry out the following steps:
receiving (SE1)the light transmitted by an illumination means (1) according to any one of claims 1 to 6 with the aid of a light-sensitive receiver (11) of the terminal device (10);
demodulating (SE3) the light received by the light-sensitive receiver (11) and retrieving the data encoded to the light;
generating (SE4) output data which indicate at least an approximate spatial position (1 a, ..., 1f) of the illumination means (1) in the spatial area (18, 18a, 18b) or details for navigating from this spatial position (1a, ..., 1f) to a navigation target within the spatial area (18, 18a, 18b) specified by the reference data, as a function of the reference data saved in the storage device (13) and the data retrieved by the demodulation device (12); and
outputting (SE5) the output data at an output device (15) of the terminal device (10).

15. The computer program according to claim 14, wherein
retrieving (SE3) the data encoded to the light comprises retrieving occupancy information concerning an occupancy status of at least one seat (21, 22) for passengers within the limited spatial area (18, 18a, 18b); and
generating (SE5) the output data on the basis of the occupancy information is carried out such that the resulting output data indicate one or a plurality of unoccupied seats (21, 22) in the spatial area (18, 18a, 18b).

## Revendications

1. Système pour la fourniture d'informations d'orientation relatives à un espace délimité (18, 18a, 18b),
**caractérisé par**
un dispositif d'éclairage (1) et
un terminal électronique mobile (10), notamment appareil intelligent,
le dispositif d'éclairage (1) comprenant:
au moins une source lumineuse (2); et
un dispositif de modulation (4) pour moduler la lumière émise par la source lumineuse (2) ;
le dispositif de modulation (4) étant configuré pour encoder sur ladite lumière, par modulation de la lumière émise par la source lumineuse (2), des données qui contiennent une identification unique du dispositif d'éclairage (1) ou qui caractérisent une position spatiale du dispositif d'éclairage (1) à l'intérieur de l'espace délimité (18, 18a, 18b);
le terminal électronique mobile (10) comprenant:
un récepteur sensible à la lumière (11) pour recevoir la lumière émise par le dispositif d'éclairage (1) dans l'espace délimité (18, 18a, 18b);
un démodulateur (12) pour démoduler la lumière reçue par le récepteur sensible à la lumière (11) et pour récupérer les données qui y ont été encodées;
un dispositif de stockage (13) pour stocker des données de référence relatives à l'espace délimité (18, 18a, 18b); et
une unité de traitement des données (14) dotée d'un ou de plusieurs programmes destinés à générer des données de sortie par l'unité de traitement des données (14) en fonction des données de référence et des données récupérées par le démodulateur (12), les données de sortie indiquant une position spatiale au moins approximative (1a, ..., 1f) du dispositif d'éclairage dans ledit espace (18, 18a, 18b) ou des indications pour naviguer à partir de cette position spatiale vers une destination de navigation spécifiée au moyen des données de référence, à l'intérieur dudit espace (18, 18a, 18b).

2. Système selon la revendication 1, les données de référence pouvant spécifier notamment un ticket électronique pour l'accès à l'espace délimité (18, 18a, 18b).

3. Système selon l'une quelconque des revendications précédentes, l'unité de traitement des données (14) comprenant au moins un processeur, et/ou
le terminal électronique mobile (10) comprenant un dispositif émetteur (15) destiné à émettre les données de sortie.

4. Système selon l'une quelconque des revendications précédentes,
l'au moins une source lumineuse (2) présentant une diode électroluminescente qui émet de la lumière dans la bande de longueurs d'onde visible.

5. Système selon l'une quelconque des revendications précédentes, le dispositif de modulation (4) étant configuré pour moduler la lumière émise par la source lumineuse (2) à une fréquence de modulation d'au moins 30 Hz, de préférence au moins 100 Hz jusqu'à, de préférence, des valeurs atteignant les mégahertz, afin d'encoder les données.

6. Système selon l'une quelconque des revendications précédentes, le dispositif d'éclairage (1) présentant de plus une interface de communication (6) dédiée à la connexion du dispositif d'éclairage (1) à une ou plusieurs sources de données (8) pour les données.

7. Système selon l'une quelconque des revendications précédentes, le dispositif d'éclairage (1) présentant de plus un dispositif de stockage (5) dédié au stockage des données;
le dispositif de modulation (4) étant configuré pour encoder au moins partiellement ladite lumière, par modulation de la lumière émise par la source lumineuse (2), les données stockées dans le dispositif de stockage (5).

8. Système selon l'une quelconque des revendications précédentes, le dispositif de modulation (4) étant prévu séparé de la source lumineuse (2) et conçu pour moduler un approvisionnement en électricité (3) de la source lumineuse (2).

9. Procédé de fourniture d'informations d'orientation dans un espace délimité (18, 18a, 18b), notamment dans un moyen de transport de passagers, comprenant:
la modulation (SB3) de la lumière d'au moins un dispositif d'éclairage (1), agencé dans un véhicule de transport de passagers, d'un système selon l'une quelconque des revendications 1 à 8, avec des données qui contiennent une identification unique du dispositif d'éclairage (1) ou qui caractérisent une position spatiale du dispositif d'éclairage (1) à l'intérieur de l'espace délimité (18, 18a, 18b).

10. Procédé selon la revendication 9, comprenant de plus:
la réception (SB2) d'informations d'occupation qui caractérisent l'état d'occupation d'au moins une place (21, 22) de passager à l'intérieur de l'espace délimité (18, 18a, 18b), et qui sont reconnues à l'aide d'un ou de plusieurs capteurs d'occupation (9, 9a - 9d) attribués à ladite place ou lesdites places (21, 22); et
la modulation (SB3) de la lumière émise par la source lumineuse (12), de telle sorte que les données encodées sur ladite lumière contiennent des données d'orientation déterminées en fonction des informations d'occupation.

11. Utilisation du système selon l'une quelconque des revendications 1 à 8 pour un moyen de transport de passagers, notamment un véhicule ferroviaire, avion ou bateau.

12. Utilisation selon la revendication 11, le dispositif d'éclairage (1) étant agencé dans une zone de transport de passagers (18, 18a, 18b) du moyen de transport de passagers ou dans une zone d'accès à celui-ci.

13. Utilisation selon la revendication 11 ou 12, le moyen de transport de passagers présentant de plus:
une ou plusieurs places (21, 22) de passager,
un ou plusieurs capteurs d'occupation (9, 9a - 9d), au moyen desquels l'occupation d'une ou de plusieurs desdites places (21, 22) peut être détectée sous forme d'informations d'occupation; et
des moyens de communication dédiés à la transmission au moins partielle des informations d'occupation à/aux dispositif(s) d'éclairage (1);
le dispositif de modulation (4) du dispositif d'éclairage (1) étant de plus configuré pour encoder, par modulation de la lumière émise par la source lumineuse (2), sur ladite lumière des données déterminées en fonction des informations d'occupation.

14. Programme d'ordinateur destiné à être exécuté sur un terminal électronique mobile (10) d'un système selon l'une quelconque des revendications 1 à 8, affichant des instructions qui, lors de leur exécution sur une unité de traitement de données (14) dudit terminal (10), font que celui-ci exécute les étapes suivantes:
réception (SE1) de la lumière émise par un moyen d'éclairage (1) selon l'une quelconque des revendications 1 à 6, à l'aide du récepteur sensible à la lumière (11) dudit terminal (10);
démodulation (SE3) de la lumière reçue par le récepteur (11) sensible à la lumière et récupération des données qui y sont encodées;
génération (SE4) de données de sortie qui indiquent une position spatiale au moins approximative (1 a, ..., 1f) du dispositif d'éclairage (1) dans ledit espace (18, 18a, 18b) ou des indications relatives à la navigation à partir de cette position spatiale (1a, ..., 1f) vers une destination de navigation spécifiée à l'aide des données de référence, à l'intérieur de l'espace (18, 18a, 18b), en fonction des données de référence déposées dans le dispositif de stockage (13) et des données récupérées par le dispositif de démodulation; et
émission (SE5) des données de sortie vers un dispositif émetteur (15) dudit terminal (10).

15. Programme d'ordinateur selon la revendication 14,
la récupération (SE3) des données encodées sur la lumière comprenant une récupération d'informations d'occupation relatives à une occupation d'au moins une place (21, 22) de passager à l'intérieur de l'espace délimité (18, 18a, 18b), et
la génération (SE5) des données de sortie sur la base des informations d'occupation s'effectuant de telle sorte que les données de sortie en résultant indiquent une ou plusieurs places (21, 22) encore inoccupées dans ledit espace (18, 18a, 18b).
